# FASCICULE DE BREVET EUROPEEN

(11) **EP 2 701 931 B1**
(45) Date de publication et mention de la délivrance du brevet: **16.12.2015**
(21) Numéro de dépôt: 12728645.8
(22) Date de dépôt: 24.04.2012
(51) Int. Cl.: B60C 11/14

(54) **PNEUMATIQUE COMPRENANT UNE BANDE DE ROULEMENT AVEC UN MATERIAU ALVEOLAIRE**
REIFEN MIT EINEM LAUFTSTREIFEN MIT SCHAUMSTOFFMATERIAL
TIRE COMPRISING A TREAD WITH A FOAM MATERIAL

(30) Priorité: 28.04.2011 FR 1153617
(43) Date de publication de la demande: 05.03.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MERINO LOPEZ, José, F-63040 Clermont-ferrand Cedex 9 (FR); VASSEUR, Didier, F-63040 Clermont-ferrand Cedex 9 (FR); CUSCITO, Olivia, F-63040 Clermont-ferrand Cedex 9 (FR); PETITJEAN, Sylvain, F-63040 Clermont-ferrand Cedex 9 (FR)
(74) Mandataire: Demaure, Pierre-Yves
(86) Numéro de dépôt international: PCT/FR2012/050900
(87) Numéro de publication internationale: WO 2012/146868

(56) Documents cités:
- EP-A2- 0 337 787
- EP-A2- 0 688 686
- EP-A2- 0 771 836
- EP-A2- 0 882 606
- EP-A2- 1 070 606

## Description

La présente invention concerne le domaine des pneumatiques comprenant un matériau alvéolaire.

Pour améliorer l'adhérence d'un pneumatique, le document WO2009/003576 ou WO2009/003577 propose un pneumatique comprenant une bande de roulement comportant
- une couche de gomme externe, appelée par la suite couche de roulage, en matériau alvéolaire, dans laquelle sont ménagés des éléments de sculpture creux, et
- une couche de gomme interne ayant une dureté supérieure à celle de la couche externe.

Pour fabriquer un tel pneumatique, on réalise une ébauche crue comprenant une masse de gomme, destinée à former la couche de roulage, dans laquelle est incorporé un agent porogène. Puis, on place l'ébauche dans un moule de vulcanisation et on chauffe l'ébauche sous pression dans ce moule.

Sous l'effet de la chaleur et de la pression, une réaction chimique impliquant l'agent porogène crée des bulles de gaz formant des alvéoles dans le matériau qui devient donc alvéolaire. Le contour externe de la couche de roulage est imposé par le moule. Une fois la cuisson achevée, on extrait le pneumatique du moule.

Pour que les performances d'adhérence et de bruit soient intéressantes, on souhaite que le taux d'expansion du matériau alvéolaire soit supérieur ou égal à 50 %. Ce taux d'expansion est obtenu de façon connue en soi par l'homme du métier en choisissant des valeurs appropriées de différents paramètres tels que notamment le taux d'agent prorogène dans la masse de gomme destinée à former la couche de roulage, la pression, la température et le temps de cuisson de cette masse de gomme.

Avec un tel taux d'expansion, après extraction du pneumatique du moule, on observe que la forme de la couche de roulage continue à évoluer, de façon que cette couche s'expanse radialement au-delà du contour externe souhaité. Cette expansion est le résultat des deux effets suivants.

D'une part, en sortie de moule, le volume des alvéoles contenant le gaz continue d'augmenter en faisant gonfler la couche de roulage au delà du contour imposé par le moule.

D'autre part, à cause de la différence de pression entre le moment où le pneumatique est dans le moule et le moment où le pneumatique est sorti du moule, on observe une expansion de la couche de roulage en sortie de moule.

Ces deux effets ne permettent pas d'obtenir en sortie de moule une géométrie précise de la couche de roulage et donc ne permettent pas d'obtenir les performances souhaitées du pneumatique.

En outre, les gaz dissous dans le matériau alvéolaire ont tendance à s'accumuler au sein de bulles de tailles relativement importantes. Ces bulles d'accumulation forment des alvéoles de grandes tailles qui fragilisent la couche de roulage et détériorent les performances du pneumatique.

Le document EP1070606A2 divulgue un pneumatique selon le préambule de la revendication 1. Le document EP 0882606A2 montre un autre pneumatique rélevant pour l'invention. L'invention a notamment pour but d'optimiser la géométrie et la résistance de la couche de roulage en matériau alvéolaire d'un pneumatique.

A cet effet, l'invention a pour objet un pneumatique selon la revendication 1.

Les conditions a) et b) imposent une densité relativement importante d'éléments de sculpture profonds dans la couche de roulage.

Ainsi, grâce à l'invention, bien que le taux d'expansion du matériau alvéolaire soit supérieur ou égal à 50%, la densité des éléments de sculpture creux dans la couche de roulage est telle que ces derniers permettent de limiter, voire de supprimer, les variations géométriques de la couche de roulage lorsque le pneumatique est sorti du moule de vulcanisation. En effet, en sortie de moule, le matériau alvéolaire s'expanse essentiellement dans les éléments de sculpture creux qui sont relativement nombreux (sans pour autant combler ces éléments de sculpture), plutôt qu'au-delà du contour externe souhaité. Enfin, les éléments de sculpture nombreux et profonds permettent, en cours de vulcanisation, d'évacuer les éventuels excès de gaz et donc d'éviter la formation de cavités de trop grandes tailles.

Ainsi, le pneumatique selon l'invention présente une couche de roulage résistante dont la géométrie est maîtrisée.

Suivant d'autres caractéristiques optionnelles du pneumatique selon l'invention :
- DP = 6 mm.

L'invention a également pour objet un procédé de fabrication d'un pneumatique selon la revendication 3.

Suivant d'autres caractéristiques optionnelles du procédé selon l'invention :
- DM = 6 mm;
- l'agent porogène comprend du p,p'-oxybis (benzene sulfonyl) hydrazide.

L'invention sera mieux comprise à la lecture de la description qui va suivre donnée uniquement à titre d'exemple et faite en se référant aux dessins dans lesquels :
- la figure 1 est une vue en perspective avec des coupes suivant des plans axial et radial d'une partie d'un pneumatique selon un premier mode de réalisation de l'invention ;
- la figure 2 est une vue en coupe suivant le plan II-II de la figure 1 ;
- la figure 3 est une vue en perspective d'une partie d'un moule de vulcanisation permettant de fabriquer le pneumatique représente sur les figures 1 et 2 ;
- la figure 4 est une vue en coupe axiale du pneumatique représenté sur les figures 1 et 2 après avoir été extrait du moule et après expansion éventuelle du matériau alvéolaire ;
- la figures 5 est une vue analogue à celle de la figure 1 d'une partie d'un pneumatique selon un deuxième mode de réalisation de l'invention ;
- la figure 6 est une vue en perspective d'une partie d'un moule de vulcanisation permettant de fabriquer le pneumatique représenté sur la figure 5.

Sur certaines des figures représentant un pneumatique, on a indiqué un repère comportant des axes X, Y, Z orthogonaux entre eux correspondant aux orientations radiale X, axiale Y et circonférentielle Z du pneumatique.

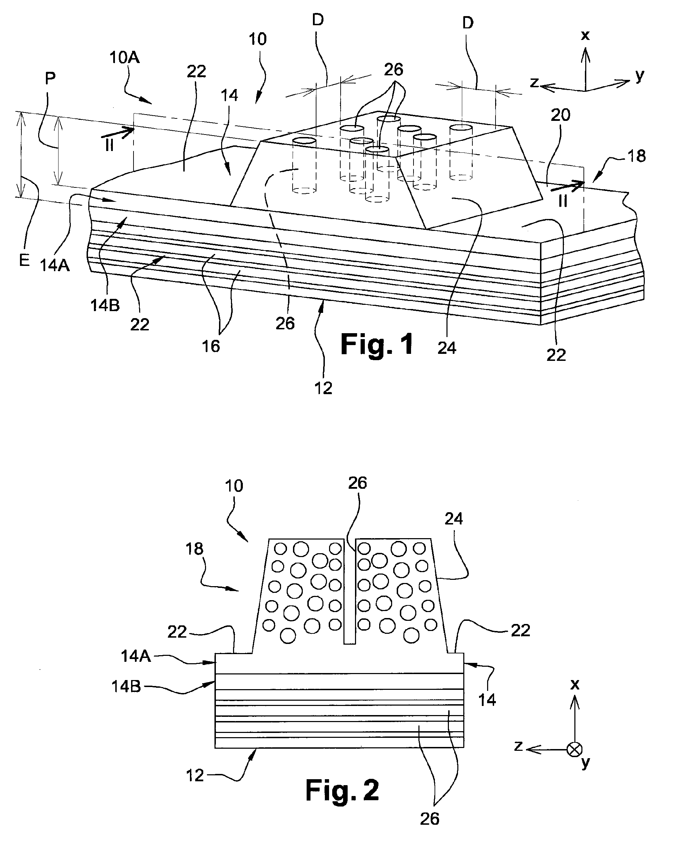

On a représenté sur les figures 1 et 2 une partie d'un pneumatique selon un premier mode de réalisation de l'invention, désigné par la référence générale 10. Sur ces figures, le pneumatique 10 présente un contour externe souhaité après sa sortie d'un moule de vulcanisation.

Le pneumatique 10 comprend une couche d'armature 12 recouverte par une bande de roulement 14.

La couche d'armature 12, connue en soi, comporte des renforts métalliques ou textiles 16 noyés dans une gomme classique.

La bande de roulement 14 comporte une couche de gomme externe, appelée couche de roulage 14A, en matériau alvéolaire dans laquelle sont ménagés des éléments de structure creux 18, et une couche de gomme interne 14B ayant une dureté supérieure à celle de la couche externe. La couche interne 14B est donc intercalée radialement entre la couche de roulage 14A et la couche d'armature 12.

La couche de roulage 14A a une épaisseur E. Le matériau de la couche de roulage 14A a un taux d'expansion supérieur ou égal à 50%. Ce taux d'expansion peut être mesuré à l'aide d'un procédé et de moyens connus en soi.

Les éléments de sculpture creux 18 forment des éléments choisis parmi des canaux 20, 22 d'évacuation d'eau délimitant, dans la couche de roulage 14A des blocs 24 ou pains de matériaux alvéolaires, et des trous borgnes 26, ménagés dans ces blocs 24 de façon à déboucher radialement.

Les canaux d'évacuation d'eau 20,22 forment par exemple des sillons circonférentiels ou des canaux sensiblement transversaux.

Dans le pneumatique 10 selon le premier mode de réalisation de l'invention, les trous borgnes 26 ont une forme générale cylindrique.

Au moins 95% des éléments de sculpture 20, 22, 26 vérifient chacun les conditions a) et b) suivantes :
a) l'élément de sculpture 20, 22, 26 est séparé d'au moins un autre élément de sculpture creux d'une distance inférieure ou égale à DP = 7 mm, la distance D de deux éléments de sculpture creux étant la distance la plus courte entre ces deux éléments de sculpture parcourus dans le matériau alvéolaire,
b) l'élément de sculpture a une profondeur P au moins égale à 80% de l'épaisseur E de la couche de roulage 14A.

De préférence, DP = 6 mm.

Les trous borgnes 26 peuvent être répartis de façon régulière dans les blocs 24, par exemple suivant une répartition en quinconce.

On décrira ci-dessous les principales étapes d'un procédé selon l'invention pour la fabrication d'un pneumatique 10 selon le premier mode de réalisation de l'invention.

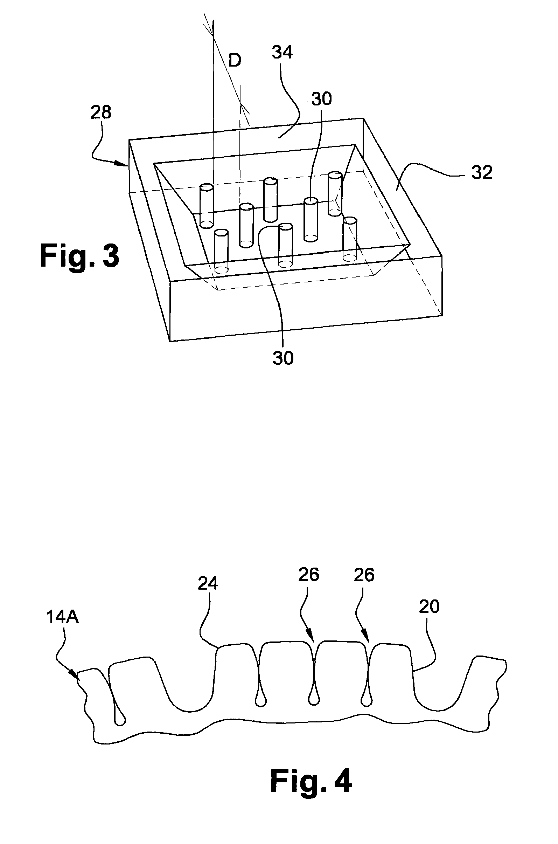

Selon ce procédé, on vulcanise une ébauche crue du pneumatique dans un moule de vulcanisation 28 dont on a représenté une partie sur la figure 3.

Sur cette figure 3, la partie du moule 28 que l'on a représentée est destinée à mouler un bloc 24. A cet effet, elle comprend notamment des éléments de moulage 30 en forme de doigts cylindriques, destinés au moulage des éléments de sculpture creux formés par les trous borgnes 26. La partie du moule 28 comporte également des éléments de moulage 32, 34 destinés à participer au moulage des éléments de sculpture creux formés par les canaux 20, 22 d'évacuation d'eau.

Le moule 28 est tel qu'au moins 95% des éléments de moulage vérifient chacun la condition suivante :
l'élément de moulage est séparé d'au moins un autre élément de moulage d'une distance inférieure ou égale à DM = 7 mm.

La distance de séparation de deux éléments de moulage est la distance la plus courte entre ces deux éléments de moulage parcourue entre ces éléments de moulage.

De préférence, DM = 6 mm.

Selon le procédé de l'invention, tout d'abord, on munit l'ébauche crue d'une masse de matériau comportant un agent porogène. Cette masse de matériau est destinée à former la couche de roulage 14A en matériau alvéolaire. L'agent porogène comprend, par exemple, du p,p'-oxybis (benzene sulfonyl) hydrazide.

Puis, on place l'ébauche crue dans le moule 28 de vulcanisation comprenant les éléments de moulage des éléments de sculpture creux.

Après vulcanisation, on sort le pneumatique du moule 28.

Comme cela est représenté sur la figure 4, en sortie de moule, le matériau alvéolaire de la bande de roulage 14A s'expanse essentiellement dans les éléments de sculpture creux, notamment les éléments 20, 26, qui sont relativement nombreux (sans pour autant combler ces éléments de sculpture), plutôt qu'au delà du contour externe souhaité tel que représenté sur les figures 1 et 2.

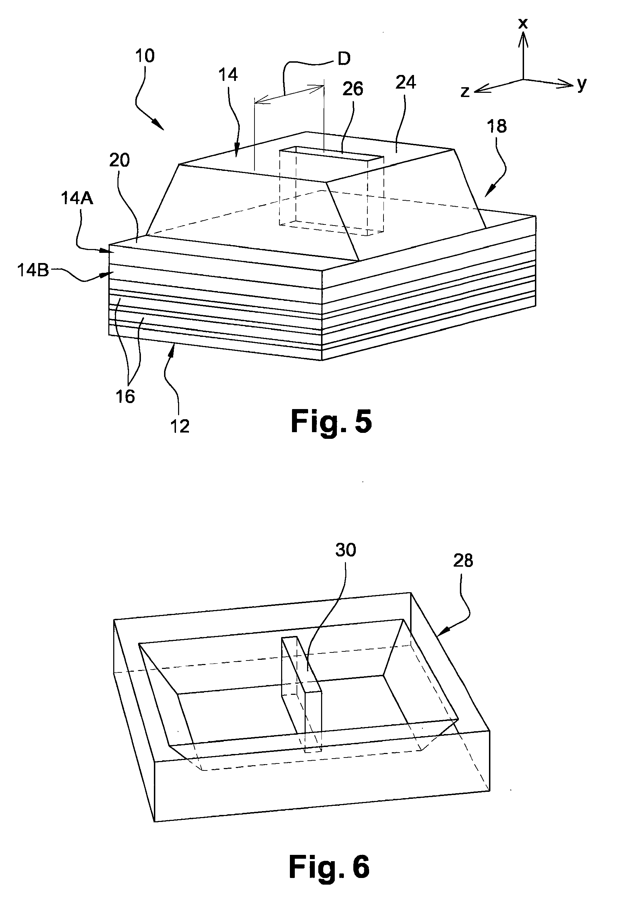

Sur la figure 5, on a représenté une partie de pneumatique 10 selon un second mode de réalisation de l'invention. Sur cette figure 5, les éléments analogues à ceux des figures précédentes sont désignés par des références identiques.

Dans ce cas, à la différence du premier mode de réalisation de l'invention, les blocs 24 peuvent comporter au moins un trou borgne 26 en forme générale de fente parallélépipédique débouchant radialement.

Le pneumatique 10 selon le second mode de réalisation de l'invention représenté sur les figures 5 et 6 peut être fabriqué conformément à un procédé sensiblement similaire à celui décrit pour la fabrication du pneumatique selon le premier mode de réalisation de l'invention.

Toutefois, dans le cas du pneumatique selon le second mode de réalisation de l'invention, la partie de moule de vulcanisation 28 comporte un élément de moulage 30 de forme générale parallélépipédique complémentaire de celle du trou borgne 26.

L'invention ne se limite pas aux modes de réalisation décrits précédemment mais au cadre défini par les revendications ci-jointes.

En particulier, on notera que les éléments de sculpture ménagés dans la bande de roulage peuvent avoir des formes variées.

## Revendications

1. Pneumatique du type comprenant une bande de roulement (14) comportant une couche de roulage (14A) en matériau alvéolaire ayant
- une épaisseur E, et
- un taux d'expansion supérieur ou égal à 50%,
la couche de roulage (14A) comprenant des éléments de sculpture creux (20, 22, 26), **caractérisé en ce qu'**au moins 95% des éléments de sculpture creux (20, 22, 26) vérifient chacun les deux conditions a) et b) suivantes :
a) l'élément de sculpture (20, 22, 26) est séparé d'au moins un autre élément de sculpture creux (20, 22, 26) d'une distance inférieure ou égale à DP = 7 mm, la distance de séparation de deux éléments de sculpture creux (20, 22, 26) étant la distance la plus courte entre ces deux éléments de sculpture (20, 22, 26) parcourue dans le matériau alvéolaire,
b) l'élément de sculpture (20, 22, 26) a une profondeur au moins égale à 80 % de l'épaisseur E de la couche de roulage (14A),
et **en ce que** les éléments de sculpture creux (20, 22, 26) vérifiant les conditions a) et b) forment des éléments choisis parmi :
- des canaux d'évacuation d'eau (20, 22) délimitant, dans la couche de roulage (14A), des blocs (24) de matériau alvéolaire, et
- des trous borgnes (26) ménagés dans ces blocs (24) de façon à déboucher radialement.

2. Pneumatique selon la revendication 1, dans lequel DP = 6 mm.

3. Procédé de fabrication d'un pneumatique dans lequel on vulcanise une ébauche crue du pneumatique dans un moule (28), **caractérisé en ce que**, le pneumatique (10) que l'on veut fabriquer étant selon l'une quelconque des revendications précédentes,
- on munit l'ébauche crue d'une masse de matériau, comportant un agent porogène, destinée à former la couche de roulage (14A) en matériau alvéolaire, et
- on place l'ébauche crue dans un moule (28) de vulcanisation comprenant des éléments de moulage (30, 32, 34) des éléments de sculpture creux (20, 22, 26),
le moule (28) étant tel qu'au moins 95% des éléments de moulage (30, 32, 34) vérifient chacun la condition suivante :
- l'élément de moulage (30, 32, 34) est séparé d'au moins un autre élément de moulage (30, 32, 34) d'une distance inférieure ou égale à DM = 7 mm, la distance de séparation de deux éléments de moulage (30, 32, 34) étant la distance la plus courte entre ces deux éléments de moulage (30, 32, 34) parcourue entre ces éléments de moulage (30, 32, 34).
- l'élément de moulage est choisi parmi :
∘ des éléments de moulage (32, 34) formant des canaux d'évacuation d'eau (20, 22) délimitant, dans la couche de roulage (14A), des blocs (24) de matériau alvéolaire, et
∘ des éléments de moulage (30) formant des trous borgnes (26) ménagés dans ces blocs (24) de façon à déboucher radialement.

4. Procédé selon la revendication 3, dans lequel DM = 6 mm.

5. Procédé selon la revendication 3 ou 4, dans lequel l'agent porogène comprend du p,p'-oxybis (benzene sulfonyl) hydrazide.

## Patentansprüche

1. Reifen des Typs, der eine Lauffläche (14) umfasst, die eine Laufschicht (14A) aus Schaumstoffmaterial umfasst, die
- eine Stärke E und
- ein Expansionsverhältnis größer oder gleich 50 % hat,
wobei die Laufschicht (14A) Hohlprofilelemente (20, 22, 26) umfasst, **dadurch gekennzeichnet, dass** mindestens 95 % der Hohlprofilelemente (20, 22, 26) jede der folgenden zwei Bedingungen a) und b) erfüllen:
a) das Profilelement (20, 22, 26) ist von mindestens einem anderen Hohlprofilelement (20, 22, 26) um einen Abstand kleiner oder gleich DP = 7 mm getrennt, wobei der Trennabstand von zwei Hohlprofilelementen (20, 22, 26) der kürzeste Abstand zwischen diesen zwei Profilelementen (20, 22, 26) ist, der in dem Schaumstoffmaterial zurückgelegt wird,
b) das Profilelement (20, 22, 26) eine Tiefe mindestens gleich 80 % der Stärke E der Laufschicht (14A) hat,
und dass die Hohlprofilelemente (20, 22, 26), die die Bedingungen a) und b) erfüllen, Elemente bilden, die ausgewählt sind aus:
- Wasserableitungskanälen (20, 22), die in der Laufschicht (14A) Blöcke (24) aus Schaumstoffmaterial abgrenzen, und
- Sacklöchern (26), die in diesen Blöcken (24) derart angeordnet sind, dass sie radial münden.

2. Reifen nach Anspruch 1, wobei DP = 6 mm.

3. Herstellungsverfahren eines Reifens, bei dem man einen Rohling des Reifens in einer Form (28) vulkanisiert, **dadurch gekennzeichnet, dass** der Reifen (10), den man herstellen will, einem der vorhergehenden Ansprüche entspricht,
- der Rohling wird mit einer Materialmasse versehen, die ein Poren bildendes Mittel umfasst, das dazu bestimmt ist, die Laufschicht (14A) aus Schaumstoffmaterial zu bilden, und
- der Rohling wird in eine Vulkanisationsform (28) platziert, die Formelemente (30, 32, 34) der Hohlprofilelemente (20, 22, 26) umfasst,
wobei die Form (28) derart ist, dass mindestens 95 % der Formelemente (30, 32, 34) jeweils die folgenden Bedingungen erfüllen:
- das Formelement (30, 32, 34) ist von mindestens einem anderen Formelement (30, 32, 34) um einen Abstand kleiner oder gleich DM = 7 mm getrennt, wobei der Trennabstand von zwei Formelementen (30, 32, 34) der kürzeste Abstand zwischen diesen zwei Formelementen (30, 32, 34) ist, der zwischen diesen Formelementen (30, 32, 34) zurückgelegt wird,
- das Formelement wird ausgewählt aus:
∘ Formelementen (32, 34), die Wasserableitungskanäle (20, 22) bilden, die in der Laufschicht (14A) Blöcke (24) aus Schaumstoffmaterial abgrenzen, und
∘ Formelementen (30), die Sacklöcher (26) bilden, die in diesen Blöcken (24) derart eingerichtet sind, dass sie radial münden.

4. Verfahren nach Anspruch 3, wobei DM = 6 mm.

5. Verfahren nach Anspruch 3 oder 4, wobei das Poren bildende Mittel p,p'-Oxybis(benzensulfonyl)hydrazid umfasst.

## Claims

1. Tyre of the type comprising a tread (14) that has a running layer (14A) made of a cellular material having
- a thickness E, and
- a degree of expansion of greater than or equal to 50%,
the running layer (14A) comprising hollow tread pattern elements (20, 22, 26),
**characterized in that** at least 95% of the hollow tread pattern elements (20, 22, 26) each satisfy the following two conditions a) and b):
a) the tread pattern element (20, 22, 26) is separated from at least one other hollow tread pattern element (20, 22, 26) by a distance less than or equal to DP = 7 mm, the separation distance between two hollow tread pattern elements (20, 22, 26) being the shortest distance between these two tread pattern elements (20, 22, 26) travelled in the cellular material,
b) the tread pattern element (20, 22, 26) has a depth at least equal to 80% of the thickness E of the running layer (14A),
and **in that** the hollow tread pattern elements (20, 22, 26) satisfying the conditions a) and b) form elements chosen from:
- water evacuation channels (20, 22) that delimit, in the running layer (14A), blocks (24) of cellular material, and
- blind holes (26) made in these blocks (24) so as to open radially.

2. Tyre according to Claim 1, in which DP = 6 mm.

3. Process for manufacturing a tyre, in which an uncured blank of the tyre is vulcanized in a mould (28), **characterized in that**, the tyre (10) that it is desired to manufacture being according to any one of the preceding claims,
- the uncured blank is provided with a mass of material, comprising a pore-forming agent, intended to form the running layer (14A) made of cellular material, and
- the uncured blank is placed in a vulcanization mould (28) comprising moulding elements (30, 32, 34) for moulding the hollow tread pattern elements (20, 22, 26),
the mould (28) being such that at least 95% of the moulding elements (30, 32, 34) each satisfy the following condition:
- the moulding element (30, 32, 34) is separated from at least one other moulding element (30, 32, 34) by a distance less than or equal to DM = 7 mm, the separation distance between two moulding elements (30, 32, 34) being the shortest distance between these two moulding elements (30, 32, 34) travelled between these moulding elements (30, 32, 34),
- the moulding element is chosen from:
∘ moulding elements (32, 34) forming water evacuation channels (20, 22) that delimit, in the running layer (14A), blocks (24) of cellular material, and
∘ moulding elements (30) forming blind holes (26) made in these blocks (24) so as to open radially.

4. Process according to Claim3, in which DM = 6 mm.

5. Process according to Claim 3 or 4, in which the pore-forming agent comprises p,p'-oxybis(benzenesulphonyl hydrazide).
